# EUROPEAN PATENT APPLICATION

(11) **EP 4 067 185 A1**
(43) Date of publication of application: **05.10.2022**
(21) Application number: 21789334.6
(22) Date of filing: 16.04.2021
(51) Int. Cl.: B60W 20/20, B60W 20/10

(54) **VEHICLE DRIVE CONTROL METHOD AND SYSTEM**

(30) Priority: 17.04.2020 CN 202010307158
(71) Applicant: Great Wall Motor Company Limited, Baoding, Hebei 071000 (CN)
(72) Inventor: LI, Yunfei, Baoding, Hebei 071000 (CN); CHEN, Qilin, Baoding, Hebei 071000 (CN)
(74) Representative: Klunker IP Patentanwälte PartG mbB
(86) International application number: PCT/CN2021/087906
(87) International publication number: WO 2021/209054

(57) **Abstract**

A method and a system for a drive control of a vehicle, the method for the drive control of the vehicle includes: step (S101) of obtaining request information reflecting a power demand of a user on the vehicle and performance information reflecting a power performance of the vehicle; step (SI02) of determining whether the vehicle meets a condition for activating a parallel operation mode according to the request information and the performance information when a result of comparison between the request information and the performance information indicates that the vehicle power performance cannot meet the power demand of the user on the vehicle; and step (S103) of activating the parallel operation mode of the vehicle in order that the vehicle outputs a power corresponding to the request information in the parallel operation mode, when the vehicle meets the condition for activating the parallel operation mode.

## Description

### CROSS-REFERENCE TO RELATED APPLICATIONS

The present disclosure claims priority to Chinese patent application No. 202010307158.9 filed on April 17, 2020 and entitled "method and system for drive control of vehicle", the entire contents of which are incorporated herein by reference.

### TECHNICAL FIELD

The present disclosure relates to the technical field of vehicles, and more particularly to a method for a drive control of a vehicle, and a system for a drive control of a vehicle.

### DESCRIPTION OF RELATED ART

A hybrid vehicle is a combination of a traditional combustion engine vehicle and a all-electric vehicle, and has the advantages of the combustion engine vehicle and the all-electric vehicle. Most of hybrid vehicles have the following three modes of operation, including: a all-electric operation mode (i.e., an engine is not in operation), a series operation mode (the engine is operated together with the drive motor) and a parallel operation mode (the drive motor and the engine are operated in the parallel operation mode), vehicles of different models are mainly based on different modes of operation.

Currently, a performance efficiency of the engine is considered merely in a driving process of the vehicle, when the vehicle has a greater power demand, the vehicle is prone to be constrained by the performance efficiency of the engine, and thus the power demand of the vehicle cannot be met.

### SUMMARY

In view of this, one objective of the present disclosure is to propose a method for a drive control of a vehicle, which enables the vehicle to meet a power demand of a user on the vehicle.

In order to achieve this objective, the technical solutions of the present disclosure are implemented in this manner:

a method for a drive control of a vehicle, including: obtaining request information reflecting a power demand of a user on the vehicle and performance information reflecting a power performance of the vehicle; determining whether the vehicle meets a condition for activating a parallel operation mode according to the request information and the performance information when a result of comparison between the request information and the performance information indicates that the vehicle power performance cannot meet the power demand of the user on the vehicle; and activating the parallel operation mode of the vehicle in order that the vehicle outputs a power corresponding to the request information in the parallel operation mode, when the vehicle meets the condition for activating the parallel operation mode.

Preferably, the request information includes a whole-vehicle-target-torque and a power parameter of an engine; the performance information includes: a whole-vehicle-maximum-torque in the parallel operation mode, a whole-vehicle-maximum-torque in a series operation mode, and a power parameter range of the engine, wherein the power parameter range of the engine is configured to reflect a maximum performance capacity of the engine in the parallel operation mode after the vehicle is in the parallel operation mode; and said determining whether the vehicle meets the condition for activating the parallel operation mode according to the request information and the performance information includes: determining that the condition for activating the parallel operation mode is met by the vehicle when the vehicle meets all following conditions including: the power parameter of the engine is within the power parameter range of the engine; the whole-vehicle-target-torque is greater than the whole-vehicle-maximum-torque in the series operation mode; and the whole-vehicle-maximum-torque in the parallel operation mode is greater than the whole-vehicle-maximum-torque in the series operation mode; and otherwise, determining that the vehicle does not meet the condition for activating the parallel operation mode.

Preferably, the power parameter of the engine includes a target revolution speed of the engine and a target torque of the engine corresponding to the target revolution speed of the engine; the power parameter range of the engine includes a revolution speed range of the engine in the parallel operation mode and a torque range of the engine in the parallel operation mode, where the torque range of the engine in the parallel operation mode is configured to be associated with the target revolution speed of the engine; and said power parameter of the engine is within the power parameter range of the engine includes:the target revolution speed of the engine is within the revolution speed range of the engine in the parallel operation mode, and the target torque of the engine is within the torque range of the engine in the parallel operation mode.

Preferably, the power parameter of the engine includes a target revolution speed of the engine and a target torque of the engine corresponding to the target revolution speed of the engine, and the method further includes obtaining the target revolution speed of the engine implemented by performing following steps of: obtaining a target gear in the parallel operation mode; and determining the target revolution speed of the engine according to the target gear in the parallel operation mode.

Preferably, said obtaining the target gear in the parallel operation mode includes: obtaining a vehicle speed and a vehicle speed change condition; and determining the target gear in the parallel operation mode according to the vehicle speed and the vehicle speed change condition.

Preferably, said determining the target revolution speed of the engine according to the target gear in the parallel operation mode includes: calculating the target revolution speed of the engine based on a following formula which is expressed as: the target revolution speed of the engine is equal to a result of multiplication of a vehicle speed and a gear ratio; the gear ratio is configured to be associated with the target gear in the parallel operation mode.

Preferably, the method for the drive control of the vehicle further includes determining the whole-vehicle-maximum-torque in the series operation mode by performing following steps of obtaining a summation value of a torque output by a drive motor when a generator has a maximum power for power generation and a maximum torque that can be output by the drive motor when a battery of the vehicle is in a high-voltage state; obtaining a maximum output torque of the drive motor reflecting a motor characteristic of the drive motor; and determining a minimum value of the summation value and the maximum output torque of the drive motor as the whole-vehicle-maximum-torque in the series operation mode.

Preferably, the method for the drive control of the vehicle further includes determining the whole-vehicle-maximum-torque in the parallel operation by performing following steps of: obtaining a maximum output torque of the engine, wherein the maximum output torque of the engine is configured to be determined based on the torque range of the engine in the parallel operation mode; obtaining a minimum value of a maximum torque that can be output by the drive motor when a battery of the vehicle is in a high-voltage state and a maximum output torque of the drive motor that reflects a motor characteristic of the drive motor; and determining a summation value of the maximum output torque of the engine and the obtained minimum value as the whole-vehicle-maximum-torque in the parallel operation mode.

Furthermore, a system for a drive control of a vehicle is further provided in one embodiment of the present disclosure, the system for the drive control of the vehicle is provided with a controller configured to perform the method for the drive control of the vehicle as described above.

Furthermore, a computer readable storage medium is further provided in one embodiment of the present disclosure, the computer readable storage medium stores a computer program instruction, that, when being executed, causes a machine to perform the method for the drive control of the vehicle as described above.

Compared with the related art, the method for the drive control of the vehicle according to the present disclosure has the following advantages:

the request information and the performance information which are obtained according to the technical solutions of the present disclosure may reflect the power demand of the user and the power performance of the vehicle. The request information is compared with the performance information and the comparison result is obtained, when the comparison result indicates that the power performance of the vehicle cannot meet the power demand of the user on the vehicle, whether the vehicle meets the condition for activating the parallel operation mode is determined according to the request information and the performance information, and the parallel operation mode of the vehicle is activated only when the condition that the condition for activating the parallel operation mode is met, such that the vehicle may output power corresponding to the request information, the power demand of the vehicle is preferentially considered, and the power performance of the vehicle is ensured.

Other features and advantages of the present disclosure will be described in detail with reference to the subsequent detailed description of embodiments.

### BRIEF DESCRIPTION OF THE DRAWINGS

The accompanying figures that constitute a part of the present disclosure are used to provide further interpretation of the present disclosure, the schematic implementations and the explanations of the schematic implementations are intended to explain the present disclosure but not constitute as inappropriate limitation to the present disclosure. In the figures:
FIG. 1 illustrates a schematic flowchart of a method for a drive control of a vehicle according to one embodiment of the present disclosure;
FIGS. 2 illustrates a schematic flowchart of a power parameter range of an engine according to one embodiment of the present disclosure;
FIG. 3 illustrates a schematic diagram of a determination of a whole-vehicle-maximum-torque in a series operation mode according to one embodiment of the present disclosure;
FIG. 4 illustrates a schematic diagram of a determination of a whole-vehicle-maximum-torque in a parallel operation mode according to one embodiment of the present disclosure;
FIG. 5 illustrates a schematic flowchart of a method for obtaining a target revolution speed of an engine in the parallel operation mode according to one embodiment of the present disclosure;
FIG. 6 illustrates a schematic flowchart of a method for obtaining a target gear reflecting a user demand in the parallel operation mode according to one embodiment of the present disclosure; and
FIG. 7 illustrates determining whether the vehicle meets the condition for activating the parallel operation mode according to one embodiment of the present disclosure.

### DETAILED DESCRIPTION OF EMBODIMENTS

It should be noted that, in the case of no conflict, the embodiments of the present disclosure and the features in the embodiments may be combined with each other.

Currently, most of hybrid vehicles have a pure electric drive mode, a series operation mode and a parallel operation mode, where the pure electric drive mode is implemented as cooperating the high-voltage battery with the drive motor to realize the driving of the vehicle (i.e., a generator is operated only after the engine is activated, thus, the generator is not in operation under the series operation mode); the series operation mode is implemented as realizing the driving of the vehicle by cooperation of the engine, the generator and the drive motor; the parallel operation mode is implemented as separately operating the engine, the generator and the drive motor to achieve the driving of the vehicle. The ratios of operation modes of different vehicles in the driving process of the vehicles are different, some vehicles are driven mainly under the series operation mode, and some vehicles are driven under a parallel operation mode. In the current condition, the efficiency of the engine are considered only in a driving process of a vehicle, when there is a greater power demand of the vehicle, the vehicle is prone to be constrained by the performance efficiency thereof and cannot meet a whole vehicle power demand from the user. The technical solution of "consideration of meeting the power demand of the vehicle preferentially" in the present disclosure will be described in detail below with reference to a plurality of drawings.

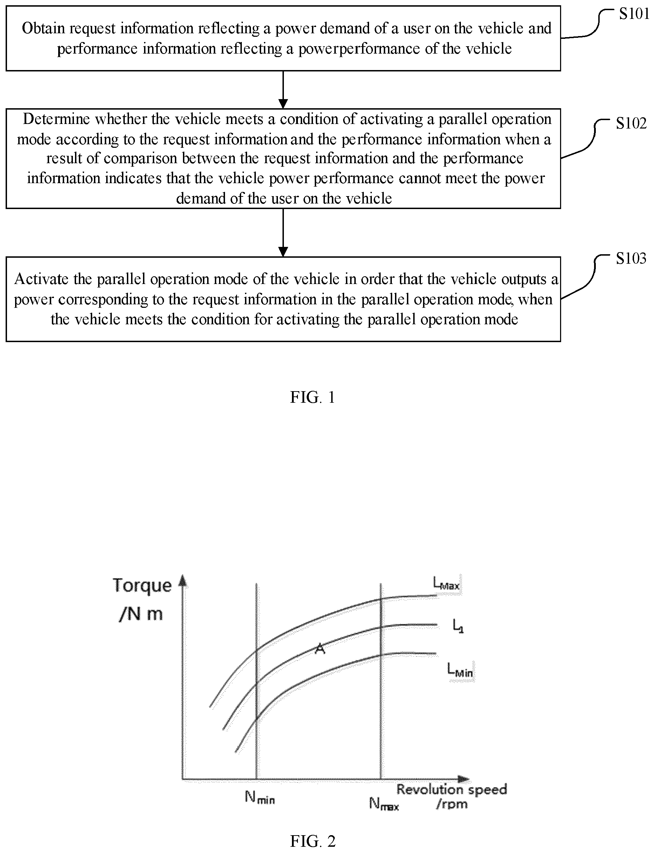

FIG. 1 illustrates a flowchart of a method for a drive control of a vehicle according to the present disclosure, as shown in FIG. 1. The method for the drive control of the vehicle includes:

At step 101, request information reflecting a power demand of a user on the vehicle and performance information reflecting a power performance of the vehicle are obtained.

The request information is a power demand request from the user, and mainly includes a whole-vehicle-target-torque and a power parameter of an engine, and the power parameter of the engine mainly reflects a power target condition of the engine in the parallel operation mode. The performance information mainly reflects a power performance condition of the vehicle itself; different vehicles have different power performances, that is, the power performance of the vehicle is determined by the characteristics of the vehicle itself. In particular, the performance information includes a whole-vehicle-maximum-torque in the parallel operation mode, a whole-vehicle-maximum-torque in the series operation mode and a power parameter range of the engine; the whole-vehicle-maximum-torque in the parallel operation mode is the maximum output torque of the whole vehicle under the parallel operation mode; the whole-vehicle-maximum-torque in the series operation mode is the maximum output torque of the whole vehicle under the series operation mode, and the power parameter range of the engine is the range of power parameters of the engine when the engine is operated normally; where the power parameter range of the engine is configured to reflect a maximum performance capacity of the engine in the parallel operation mode after the vehicle is in the parallel operation mode.

At step S102, determining whether the vehicle meets the condition for activating the parallel operation mode according to the request information and the performance information, when the comparison result between the request information and the performance information reflects that the vehicle power performance cannot meet the power demand of the user on the vehicle.

At step S103, the parallel operation mode of the vehicle is activated when the vehicle meets the condition for activating the parallel operation mode, so that the vehicle outputs power corresponding to the request information in the parallel operation mode.

The comparison result of the request information and the performance information reveals that the power performance of the vehicle cannot meet the power demand of the vehicle on the vehicle, in particular, the whole-vehicle-target-torque is greater than the whole-vehicle-maximum-torque of the vehicle in the series operation mode, that is, the whole vehicle cannot meet the torque demand of the user even if the vehicle outputs the maximum torque in the series operation mode; in this condition, whether the condition for activating the parallel operation mode is met by the vehicle is determined. The parallel operation mode can be activated and the subsequent associated operations are performed only when the condition for activating the parallel operation mode is met.

More preferably, in order to activate the parallel operation mode, the following first condition, second condition and third condition need to be met, the first condition, the second condition and the third condition are described below:

the first condition includes: the power parameter of the engine is within the power parameter range of the engine, that is, the power parameter of the engine needs to be within the maximum power parameter range that the engine can output.

The second condition includes: the whole-vehicle-target-torque is greater than the whole-vehicle-maximum-torque in the series operation mode; this condition is used to reflect that the vehicle's maximum torque in the series operation mode cannot meet the whole-vehicle-target-torque as required by the user, where the whole-vehicle-maximum-torque in the series operation mode may be obtained directly through measurement.

The third condition includes: the whole-vehicle-maximum-torque in the parallel operation mode is greater than the whole-vehicle-maximum-torque in the series operation mode; this condition is used for reflecting that the maximum power that can be output by the vehicle is the whole-vehicle-maximum-torque in the parallel operation mode, rather than the whole-vehicle-maximum-torque in the series operation mode, where the condition is determined according to the characteristics of the vehicle itself, and the whole-vehicle-maximum-torque in the parallel operation mode may also be directly obtained through measurement.

If any one of the first condition, the second condition and the third condition is not met, a determination that the vehicle does not meet the condition for activating the parallel operation mode is made.

More preferably, the power parameter of the engine includes a target revolution speed of the engine and a target torque of the engine corresponding to the target revolution speed of the engine. the power parameter range of the engine includes a revolution speed range of the engine in the parallel operation mode and a torque range of the engine in the parallel operation mode, where the torque range of the engine in the parallel operation mode is configured to be associated with the target revolution speed of the engine, the power parameter of the engine is within the power parameter range of the engine includes: the target revolution speed of the engine is within the range of revolution speed of the engine in the parallel operation mode, and the target torque of the engine is within the torque range of the engine in the parallel operation mode. FIG. 2 illustrates a schematic diagram of the power parameter range of the engine, as shown in FIG. 2, Nmax represents a maximum revolution speed operated in the parallel operation mode; Nmin represents a minimum revolution speed operated in the parallel operation mode; Lmax is a curve that represents a maximum operating torque in the parallel operation mode in an range of [Nmin, Nmax]; Lmin is a curve representing a minimum operating torque in the parallel operation mode in the interval of [Nmin, Nmax], and L1 represents an optimal operation curve of the engine. "A" represents the power parameter range of the engine, that is, the first condition indicates that the target revolution speed of the engine and the corresponding target torque of the engine need to be within the area A in FIG. 2. Where, the abscissas represent revolution speed, and the vertical ordinates represents torque.

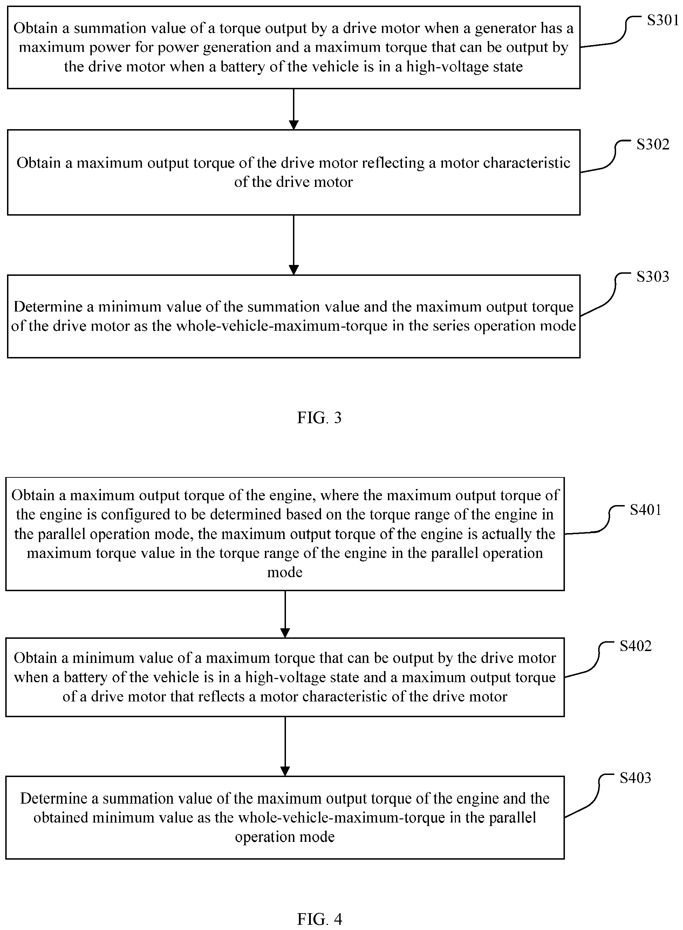

More preferably, FIG. 3 illustrates a flowchart of determination of the whole-vehicle-maximum-torque in the series operation mode, as shown in FIG. 3, in the second condition, the whole-vehicle-maximum-torque in the series operation mode is determined according to following steps:

At step 301, a summation value of a maximum torque that the drive motor can output when the generator is at a maximum generation power and a maximum torque that the drive motor can output when a battery of the vehicle is in a high-voltage state is obtained;

At step S302, a maximum output torque of the drive motor reflecting a motor characteristic of the drive motor is obtained; and

At step S303, the minimum value of the summation value and the maximum output torque of the drive motor is determined as the whole-vehicle-maximum-torque in the series operation mode.

In other words, the whole-vehicle-maximum-torque in the series operation mode=Min[the summation value of the maximum torque that the drive motor can output when the generator is at the maximum generation power and the maximum torque that the drive motor can output when the battery of the vehicle is in the high-voltage state, the maximum output torque of the drive motor reflecting the motor characteristic of the drive motor], wherein "Min[a, b]" represents selection of the minimum value of A and B. The whole-vehicle-maximum-torque in the series operation mode is the minimum value of the summation value obtained according to the step S301 and the maximum output torque of the drive motor, that is, the summation value obtained according to the step S301 and the maximum output torque of the drive motor are mutually limited, and the selection of the minimum value represents the maximum torque that can be output by the drive motor.

More preferably, FIG. 4 illustrates a flowchart of determination of a whole-vehicle-maximum-torque in the parallel operation mode, as shown in FIG. 4, in the third condition, the whole-vehicle-maximum-torque in the parallel operation mode is determined according to following steps:

at step 401, a maximum output torque of the engine is obtained, where the maximum output torque of the engine is configured to be determined based on the torque range of the engine in the parallel operation mode, the maximum output torque of the engine is actually the maximum torque value in the torque range of the engine in the parallel operation mode;

at step S402, a minimum value of a maximum torque that can be output by the drive motor when the battery of the vehicle is in the high-voltage state, and a maximum output torque of the drive motor reflecting the motor characteristic of the drive motor is obtained; and

at step S403, a summation value of the maximum output torque of the engine, and the minimum value of the maximum torque that can be output by the drive motor when the battery of the vehicle is in the high-voltage state, and the maximum output torque of the drive motor reflecting the motor characteristic of the drive motor is determined as the whole-vehicle-maximum-torque in the parallel operation mode.

That is, the whole-vehicle-maximum-torque in the parallel operation mode is equal to the summation of the maximum output torque of the engine and Min [the maximum torque that the drive motor can output when the battery of the vehicle is in the high-voltage state, the maximum output torque of the drive motor reflecting the motor characteristic of the drive motor]. Where a function "Min [ a, b]" represents a minimum value of A and B.

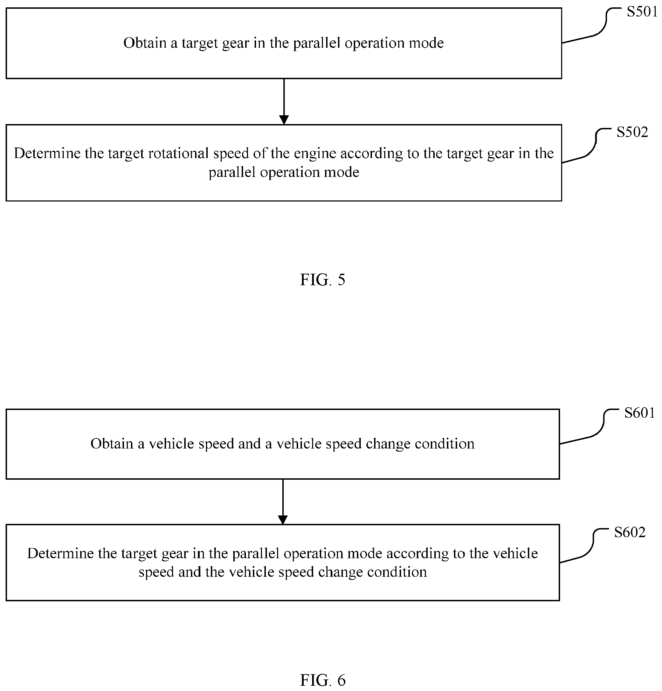

More preferably, FIG. 5 is a flowchart of a method for obtaining a target revolution speed of an engine according to one embodiment of the present disclosure. As shown in FIG. 5, the power parameter of the engine includes a target revolution speed of the engine and a target torque of the engine corresponding to the target revolution speed of the engine, and the method for the drive control of the vehicle further includes obtaining the target revolution speed of the engine according to following steps:
at step S501, a target gear in the parallel operation mode is obtained;
at step S502, the target revolution speed of the engine is determined according to the target gear in the parallel operation mode.

Where, in the step S501, the target gear in the parallel operation mode is determined by a vehicle speed. Preferably, FIG. 6 is a flowchart of a method for obtaining a target gear reflecting a user requirement in the parallel operation mode, as shown in FIG. 6, the method for obtaining the target gear reflecting user requirement in the parallel operation mode includes:
at step S601, a vehicle speed and a change condition of the vehicle speed are obtained; and
at step S602, the target gear in the parallel operation mode is determined according to the vehicle speed and the change condition of the vehicle speed.

In particular, a detailed description is given by taking a determination of a first gear and a second gear as an example. When the vehicle speed change condition reveals that the vehicle speed is decelerated and the vehicle speed is greater than a first vehicle speed threshold, the first gear is determined as the target gear in the parallel mode; when the vehicle speed change condition reveals that the vehicle speed is accelerated and the vehicle speed is greater than a second vehicle speed threshold value, the second gear is determined as the target gear in the parallel operation mode.

Where, in the step 502, the target revolution speed of the engine may be calculated based on the following formula:
the target revolution speed of the engine is equal to a result of multiplication of a vehicle speed and a gear ratio;

Where the gear ratio is configured to be associated with the target gear in the parallel operation mode. In particular, each target gear in the parallel operation mode corresponds to one gear ratio.

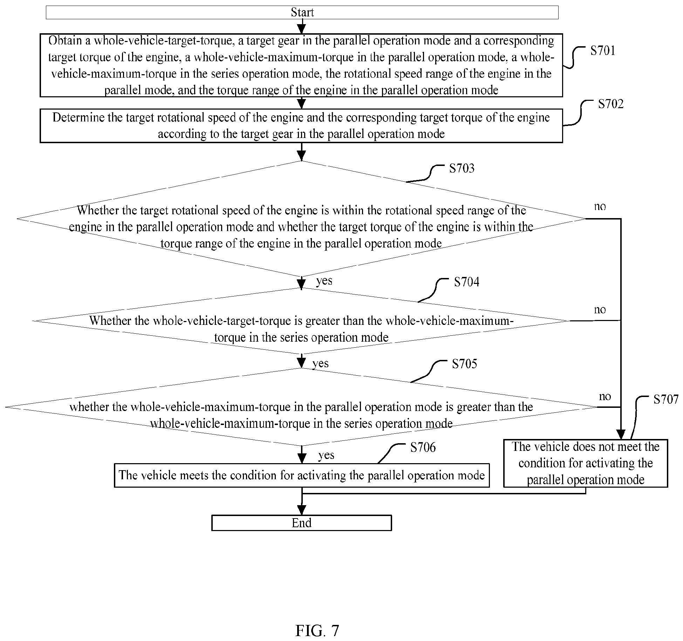

FIG. 7 illustrates a flowchart of a method for determining whether a condition for activating the parallel operation mode is met by the vehicle according to one embodiment of the present disclosure. As shown in FIG. 7, the method for the drive control of the vehicle includes:

At step S701, a whole-vehicle-target-torque, a target gear in the parallel operation mode and a corresponding target torque of the engine, a whole-vehicle-maximum-torque in the parallel operation mode, a whole-vehicle-maximum-torque in the series operation mode, the revolution speed range of the engine in the parallel mode, and the torque range of the engine in the parallel operation mode are obtained;

At step S702, the target revolution speed of the engine and the corresponding target torque of the engine are determined according to the target gear in the parallel operation mode;

At step S703, whether the target revolution speed of the engine is within the revolution speed range of the engine in the parallel operation mode and whether the target torque of the engine is within the torque range of the engine in the parallel operation mode are determined; and

At step S704, a determination that the whole-vehicle-target-torque is greater than the whole-vehicle-maximum-torque in the series operation mode is made.

At step S705, a determination that the whole-vehicle-maximum-torque in the parallel operation mode is greater than the whole-vehicle-maximum-torque in the series operation mode is made.

At step S706, in the event that the results of determinations of the step S703, the step S704, and the step S705 are positive, a determination that the vehicle meets the condition for activating the parallel operation mode is made.

At step S707, in the event that any one of results of the determinations of the step S703, the step S704, and the step S705 is negative, a determination that the vehicle does not meet the condition for activating the parallel operation mode is made.

According to the aforesaid embodiment, whether the vehicle meets the condition for activating the parallel operation mode may be determined.

According to the aforesaid embodiment, when there is a greater power demand for the whole vehicle, and when the power demand cannot be met in the series operation mode, whether the vehicle meets the condition for activating the parallel operation mode is considered, such that the vehicle can activate the parallel operation mode and output power corresponding to the request information according to an actual operation condition thereof, thereby ensuring normal power performance. The condition for activating the parallel operation mode include: the power parameter of the engine is within the power parameter range of the engine; the whole-vehicle-target-torque is greater than the whole-vehicle-maximum-torque in the series operation mode; and the whole-vehicle-maximum-torque in the parallel operation mode is greater than the whole-vehicle-maximum-torque in the series operation mode.

Furthermore, a system for a drive control of a vehicle is further provided in the present disclosure, where the system for the drive control of the vehicle is configured with a controller, and the controller is configured to perform the method for the drive control of the vehicle described above.

In other embodiment, the system for the drive control of the vehicle includes a processor and a memory, executive steps of the method for the drive control of the vehicle are stored as a program unit in the memory, and the processor is configured to execute the program unit stored in the memory to implement corresponding functions.

The processor includes a kernel which is used to call the corresponding program unit in the memory. There may be one or a plurality of kernels, the drive control of the vehicle is realized by adjusting parameters of the one or plurality of kernels.

The memory may include a non-permanent memory, a RAM (Random Access Memory) and/or a non-volatile memory in a computer-readable medium, which may be such as a ROM (Read Only Memory) or a flash RAM; and the memory includes at least one memory chip.

A machine-readable storage medium is provided in one embodiment of the present disclosure, the machine-readable storage medium stores an instruction that is executed to cause a machine to perform the method for the drive control of the vehicle as described above.

A processor is provided in one embodiment of the present disclosure, the processor is configured to execute the program in the memory, when the program is executed, the method for the drive control of the vehicle is performed.

A computer program product is further provided in the present application, the computer program product is adapted to, when being executed on a data processing device, perform a program for initializing the steps of the method for the drive control of the vehicle in the embodiment.

Those skilled in the art should understand that the embodiments of the present application may be provided as a method, a system or a computer program product. Therefore, the present application may be in the form of an entirely hardware embodiment, an entirely software embodiment, or an embodiment of the combination of software and hardware. Moreover, the present application may also be in the form of a computer program product implemented on one or more computer-usable storage mediums (which include but are not limited to a magnetic disk memory, a CD-ROM, an optical memory, etc.) containing computer-usable program code.

The present application is described with reference to flowcharts and/or block diagrams of the method, the device (system), and the computer program product according to embodiments of the present application. It should be understood that each process in the flowchart and/or each block in the block diagram, and the combinations of processes in the flowchart and/or blocks in the block diagram may be implemented by computer program instructions. These computer program instructions may be provided to a processor of a general purpose computer, a special purpose computer, an embedded processor, or other programmable data processing device to produce a machine, such that the instruction executed by the processor of the computer or other programmable data processing device generates the device for implementing the functions specified in one or more processes in the flowchart and/or specified in one or more blocks in the block diagram.

These computer program instructions may also be stored in a computer-readable memory capable of guiding the computer or other programmable data processing device to be operated in a particular manner, such that the instructions stored in the computer-readable memory produce a manufacture material including an instruction device that implements the functions specified in one or more processes of the flowchart and/or specified in one or more blocks in the block diagram.

These computer program instructions may also be loaded into the computer or other programmable data processing device, such that a series of operational steps are performed on the computer or the programmable data processing device to produce a computer-implemented process, and the instruction executed on the computer or the programmable data processing device provides steps for implementing the functions specified in one or more processes of the flowchart and/or specified in one or more blocks of the block diagram.

In a typical configuration , the computing device includes one or more processors (central processing units), an input/output interface, a network interface, and an internal memory.

The memory may include a non-persistent memory, a RAM (Random Access Memory and/or a non-volatile memory in a computer-readable medium, which may be such as a ROM (Read Only Memory) or a flash RAM. This memory is an example of the computer-readable medium.

The computer-readable medium includes a non-volatile medium and a volatile medium, a removable medium and a non-removable medium, information may be stored through any method or technology. The information may be computer-readable instruction, data structure, program modules, or other data. Examples of storage medium of a computer include but are not limited to PRAM (Phase Change Random Access Memory), SRAM (Static Random Access Memory), DRAM (Dynamic Random Access Memory), other types of RAM (Random Access Memory), ROM (Read Only Memory), EEPROM (Electrically Erasable Programmable Read Only Memory), flash memory or other memory technology, CD-ROM (Compact Disk Read Only Memory), DVD (Digital Versatile Disc), or other optical storage medium, magnetic cassettes, magnetic tape magnetic disk storage or other magnetic storage devices, or any other non-transmission medium, the storage medium may be used to store information that can be accessed by the computing device. According to the definitions in the present disclosure, the computer-readable medium does not include a transitory computer readable media such as a modulated data signal and a modulated carrier wave.

It should also be noted that, the terms "comprising", "including" or any other variation are intended to cover a non-exclusive inclusion, so that a process, a method, goods, or a device which includes a series of elements not only includes the elements, but also includes other elements that are not expressly listed, or includes the elements inherent to such process, method, goods, or device. In the absence of more limitations, an element which is defined by a sentence "includes one ..." does not exclude a presence of additional identical elements in the process, the method, the goods, and the device which include the elements.

The foregoing embodiments are only preferable embodiments of the present application, and should not be regarded as limitations to the present application. All modifications, equivalent replacements, and improvements, which are made within the spirit and the principle of the present application, should all be included in the protection scope of the present application.

## Claims

1. A method for a drive control of a vehicle, comprising:
obtaining request information reflecting a power demand of a user on the vehicle and performance information reflecting a power performance of the vehicle;
determining whether the vehicle meets a condition for activating a parallel operation mode according to the request information and the performance information when a result of comparison between the request information and the performance information indicates that the vehicle power performance cannot meet the power demand of the user on the vehicle; and
activating the parallel operation mode of the vehicle in order that the vehicle outputs a power corresponding to the request information in the parallel operation mode, when the vehicle meets the condition for activating the parallel operation mode.

2. The method for the drive control of the vehicle according to claim 1, wherein the request information comprises: a whole-vehicle-target-torque and a power parameter of an engine;
the performance information comprises: a whole-vehicle-maximum-torque in the parallel operation mode, a whole-vehicle-maximum-torque in a series operation mode, and a power parameter range of the engine, wherein the power parameter range of the engine is configured to reflect a maximum performance capacity of the engine in the parallel operation mode after the vehicle is in the parallel operation mode;
and said determining whether the vehicle meets the condition for activating the parallel operation mode according to the request information and the performance information comprises:
determining that the condition for activating the parallel operation mode is met by the vehicle when the vehicle meets all following conditions comprising: the power parameter of the engine is within the power parameter range of the engine; the whole-vehicle-target-torque is greater than the whole-vehicle-maximum-torque in the series operation mode; and the whole-vehicle-maximum-torque in the parallel operation mode is greater than the whole-vehicle-maximum-torque in the series operation mode; and
otherwise, determining that the vehicle does not meet the condition for activating the parallel operation mode.

3. The method for the drive control of the vehicle according to claim 2, wherein, the power parameter of the engine comprises a target revolution speed of the engine and a target torque of the engine corresponding to the target revolution speed of the engine;
the power parameter range of the engine comprises a revolution speed range of the engine in the parallel operation mode and a torque range of the engine in the parallel operation mode, wherein the torque range of the engine in the parallel operation mode is configured to be associated with the target revolution speed of the engine;
and the power parameter of the engine is within the power parameter range of the engine comprises:
the target revolution speed of the engine is within the revolution speed range of the engine in the parallel operation mode, and the target torque of the engine is within the torque range of the engine in the parallel operation mode.

4. The method for the drive control of the vehicle according to claim 2, wherein the power parameter of the engine comprises a target revolution speed of the engine and a target torque of the engine corresponding to the target revolution speed of the engine, and the method further comprises obtaining the target revolution speed of the engine implemented by performing following steps of:
obtaining a target gear in the parallel operation mode; and
determining the target revolution speed of the engine according to the target gear in the parallel operation mode.

5. The method for the drive control of the vehicle according to claim 4, wherein said obtaining the target gear in the parallel operation mode comprises:
obtaining a vehicle speed and a vehicle speed change condition; and
determining the target gear in the parallel operation mode according to the vehicle speed and the vehicle speed change condition.

6. The method for the drive control of the vehicle according to claim 4, wherein said determining the target revolution speed of the engine according to the target gear in the parallel operation mode comprises: calculating the target revolution speed of the engine based on a following formula which is expressed as:
the target revolution speed of the engine is equal to a result of multiplication of a vehicle speed and a gear ratio;
wherein the gear ratio is configured to be associated with the target gear in the parallel operation mode.

7. The method for the drive control of the vehicle according to claim 2, further comprising: determining the whole-vehicle-maximum-torque in the series operation mode by performing following steps of:
obtaining a summation value of a torque output by a drive motor when a generator has a maximum power for power generation and a maximum torque that can be output by the drive motor when a battery of the vehicle is in a high-voltage state;
obtaining a maximum output torque of the drive motor reflecting a motor characteristic of the drive motor; and
determining a minimum value of the summation value and the maximum output torque of the drive motor as the whole-vehicle-maximum-torque in the series operation mode.

8. The method for the drive control of the vehicle according to claim 2, further comprising determining the whole-vehicle-maximum-torque in the parallel operation by performing following steps of:
obtaining a maximum output torque of the engine, wherein the maximum output torque of the engine is configured to be determined based on the torque range of the engine in the parallel operation mode;
obtaining a minimum value of a maximum torque that can be output by the drive motor when a battery of the vehicle is in a high-voltage state and a maximum output torque of the drive motor that reflects a motor characteristic of the drive motor; and
determining a summation value of the maximum output torque of the engine and the obtained minimum value as the whole-vehicle-maximum-torque in the parallel operation mode.

9. A system for a drive control of a vehicle, wherein the system for the drive control of the vehicle is provided with a controller configured to perform the method for the drive control of the vehicle according to any one of claims 1-8.

10. A computer readable storage medium which stores a computer program instruction, that, when being executed, causes a machine to perform the method for the drive control of the vehicle according to any one of claims 1-8.

11. A computer program product, wherein the computer program product is configured to, when executed on a data processing device, execute a program code of the method for the drive control of the vehicle according to any one of claims 1-8.
